# EUROPÄISCHE PATENTSCHRIFT

(11) **EP 2 664 806 B1**
(45) Veröffentlichungstag und Bekanntmachung des Hinweises auf die Patenterteilung: **22.02.2017**
(21) Anmeldenummer: 13167945.8
(22) Anmeldetag: 15.05.2013
(51) Int. Cl.: F16B 12/26, F25D 1/00, F16B 2/22, F25D 23/06

(54) **Steck-Schnapp-System für Kühlmöbel**
Plug and click system for refrigerator cabinets
Système d'enfichage-encliquetage pour meuble réfrigérant

(30) Priorität: 15.05.2012 DE 102012009588
(43) Veröffentlichungstag der Anmeldung: 20.11.2013
(73) Patentinhaber: Exner GmbH & Co. KG, 92268 Etzelwang (DE)
(72) Erfinder: Exner, Helmut, 92268 Etzelwang (DE)
(74) Vertreter: Lang, Christian

(56) Entgegenhaltungen:
- EP-A1- 0 675 989
- WO-A2-2008/021044
- DE-A1- 2 529 801
- US-A- 5 613 338
- US-A1- 2005 034 419

## Beschreibung

### GEBIET DER ERFINDUNG

Die vorliegende Erfindung betrifft ein Steck-Schnapp-System zur Verbindung von Bauteilen, wie beispielsweise Wandelementen, Möbelelementen, Container etc., und insbesondere für Kühlmöbel und Großküchenmöbel.

### STAND DER TECHNIK

Die vorliegende Erfindung geht aus von der DE 37 028 94 A1, in der eine Steckleistenverbindung beschrieben ist, die eine feste Verbindung von Wandelementen, beispielsweise für Kühlmöbel, mittels einer Clip-Verbindung offenbart. Die Clip-Verbindung umfasst hierbei eine Stegleiste und eine Nutleiste, wobei die Stegleiste einen Steg aufweist, der etwa im Bereich seiner Längsmittelebene einen Längsschlitz umfasst, um dadurch ausgebildete Stegteile aufeinander zu bewegen zu können, sodass der Steg in die Nutleiste mit einer teilkreisförmigen Nut eingeführt und formschlüssig darin aufgenommen werden kann.

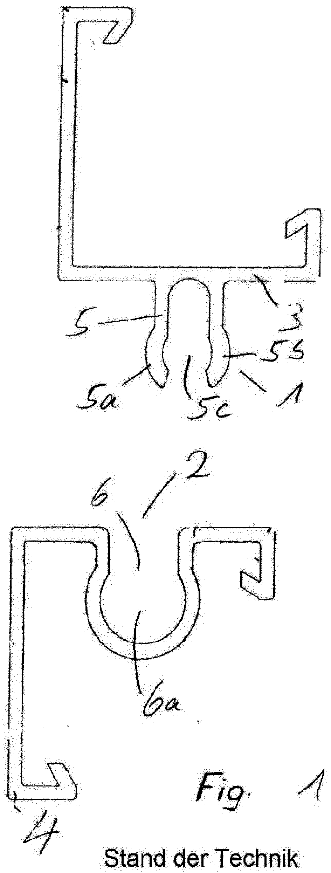

Ein Beispiel für eine entsprechende Verbindung ist in der Fig. 1 gezeigt.

Die Fig. 1 zeigt ein erstes Profil 1 mit einer Stegleiste 5 und ein zweites Profil 2 mit einer Nutleiste 6. Das erste Profil 1 umfasst einen Profilkörper 3, der beispielsweise einen Teil einer Wand darstellen kann, während das zweite Profil 2 einen zweiten Profilkörper 4 aufweist, der ebenfalls einen Teil einer Wand bilden kann.

Die Stegleiste 5 umfasst zwei Stegteile 5A und 5B die einen Hohlraum 5C zwischen sich begrenzen. Die Profilstege 5A und 5B weisen eine Außenkontur auf, die dem teilkreisförmigen Nutabschnitt 6A entspricht, sodass die Teilstege 5A, 5B, wenn sie in die Nut 6 eingefügt sind, dicht an der Innenwand des Nutbereichs 6A anliegen und somit eine feste, formschlüssige Verbindung zwischen der Stegleiste und der Nutleiste gegeben ist. Zum Einführen des Stegs 5 in die Nut 6 werden die Stegteile 5A, 5B elastisch verformt, sodass sie aufeinander zuschwenken und durch den flaschenhalsähnlichen Bereich der Nut 6 hindurch passen.

Obwohl mit einer derartigen Steckleistenverbindung bereits sehr gute stabile Verbindungen zwischen Bauteilen und insbesondere Kühlmöbelelementen möglich sind, besteht für Anwendungen, bei denen starke Vibrationen auftreten, einen Bedarf dahingehend, dass die Stabilität weiter verbessert wird.

Die WO 2008/021044 A2 offenbart einen Verbindungsmechanismus insbesondere für Bodenpaneelen. Auf einer Seite umfasst ein Paneel zwei Federarme, die durch einen Keil an der anderen Seite eines anderen Paneels aufspreizbar sind, um Vorsprünge zu hintergreifen und auf diese Wiese für einen festen Halt zu sorgen.

Die EP 0 675 989 A0 (bzw. WO 94/15035 A1) offenbart eine Einrichtung zur Verbindung zweier Profile, bei der an einem ersten Profil zwei Stege ausgebildet sind, die an zwei entsprechenden Klemmstegen des anderen Profils gehalten sind. An dem anderen Profil sind ferner zwei Vorsprünge vorgesehen, die im Zustand der bestehenden Verbindung zwar nicht von den Stegen des ersten Profils berührt werden, aber für eine höhere Verdrehsicherung sorgen.

Das US-Patent 5 613 338 A befasst sich ebenfalls mit der Verbindung von Paneelen durch federnde Elemente, von denen jeweils Paare an der einen Seite eines Paneels an der anderen Seite eines anderen Paneels einrasten.

Die DE 25 29 801 A1 betrifft einen vorgefertigten Kühl- und Gefrierschrank, bei dem an einem Element zwei federnde Stege vorgesehen sind, die aufeinander zu federn und dadurch ein Einrasten zweier Stege an dem anderen Element in Aussparungen ermöglichen.

Die US 2005/0034419 A1 befasst sich ebenfalls mit Schnappverbindungen für Bauteile eines Kühlgeräts.

### OFFENBARUNG DER ERFINDUNG

### AUFGABE DER ERFINDUNG

Es ist deshalb Aufgabe der Erfindung die Steckleistenverbindung der eingangs beschriebenen Art dahingehend weiter zu verbessern, dass die Stabilität der Verbindung weiter erhöht wird, wobei gleichzeitig die einfache Art des Zusammenbaus und der Möglichkeit des Trennens der Bauteile erhalten bleiben soll. Außerdem sollen die Komponenten einer entsprechend verbesserten Steck-Schnapp-Verbindung weiterhin einfach herstellbar sein.

### TECHNISCHE LÖSUNG

Diese Aufgabe wird gelöst durch eine Steck-Schnapp-Verbindung gemäß Anspruch 1. Darüber hinaus wird ein Kühlmöbel mit einer entsprechenden Steck-Schnapp-Verbindung offenbart. Weitere Ausgestaltungen sind Gegenstand der abhängigen Ansprüche.

Die Erfindung geht aus von der Erkenntnis, dass eine Stabilisierung der Steckverbindung dadurch möglich ist, dass ein zusätzlicher Formschluss bezüglich eines weiteren Bewegungsfreiheitsgrads vorgesehen wird. Bei der herkömmlichen Steck-Schnapp-Verbindung, wie sie in der DE 3 702 894 A1 beschrieben ist, ist ein Formschluss lediglich in Bezug auf Translationsbewegungen quer zu einer Längsrichtung der Steck-Schnapp-Verbindung gegeben, die sich entlang der Nut bzw. des entsprechenden Stegs erstreckt. So kann sich der Steg, wenn er, wie sich aus der Figur 1 ergibt, in die Nut eingeführt ist, gemäß der Darstellung der Figur 1 weder nach links oder rechts noch nach oben oder unten bewegen. Dies wird durch den Formschluss, der durch die bauchige Gestaltung der Stege bzw. der Nut gegeben ist, verhindert. Lediglich eine lineare Bewegung senkrecht zur Bildebene ist durch die Formschlussausbildung gemäß der Figur 1 möglich. In dieser Richtung wird der Steg in der Nut ausschließlich durch Kraftschluss, welche durch die Reibungskraft erzeugt wird, gehalten. Darüber hinaus
sind auch in bestimmten Grenzen Drehbewegungen um die Längsachse, d.h. die Achse senkrecht zur Bildebene, möglich, wobei dies nur durch die angrenzenden Bauteile, also den Profilkörper in Verbindung mit dem Steg bzw. der Nut verhindert wird. Bei entsprechenden Toleranzen kann es hier jedoch zu unerwünschten Bewegungen und somit zu einer Destabilisierung der Steck-Schnapp-Verbindung kommen.

Dem wirkt die vorliegende Erfindung dadurch entgegen, dass Nut und Steg so ausgebildet sind, dass ein weiterer Formschluss bewirkt wird, welcher einem weiteren Bewegungsfreiheitsgrad entgegenwirkt und zwar insbesondere einer Drehbewegung von Nut und Steg zueinander um ihre Längsachsen oder einer translatorischen Bewegung entlang ihrer Längsachsen. Die Steck-Schnapp-Verbindung weist ein Anschlagelement in der Nut auf, welches Flanken aufweist und in die Nut hervorstehen kann, sodass Anschlagflächen des Stegs an dem Anschlagelement anliegen. Dadurch kann die Stabilität der Steck-Schnapp-Verbindung auf einfache Weise deutlich verbessert werden.

Nut und Steg können entsprechend zur Längsachse sich erstreckende Formschlusselemente aufweisen, die eine relative Drehung von Nut und Steg zueinander um die Längsachse formschlüssig verhindern.

Unter Formschluss wird bei der vorliegenden Verbindung jegliche Halterung von Bauteilen oder Verhinderung einer Bewegung der Bauteile durch gegenseitige Anlage von Bauteilen verstanden. Allerdings kann, wie bei der vorliegenden Steck-Schnapp-Verbindung der Formschluss durch entsprechende Kraftaufbringung und Verformung der beteiligten Bauteile, insbesondere elastische Verformung der Bauteile überwunden werden.

Zur Erhöhung der Stabilität der Steck-Schnapp-Verbindung kann somit im Bereich der Nut ein Anschlagelement vorgesehen sein, welches den in die Nut eingreifenden Steg stabilisiert bzw. in seiner Bewegungsmöglichkeit einschränkt, wobei das Anschlagelement Flanken aufweist, die mit Anschlagflächen des Stegs formschlüssig zusammenwirken, um eine Drehbewegung um die Längsachse zu vermeiden.

Das Anschlagelement kann als in die Nut hervorstehende Kante eines teilkreisförmigen Nutbereichs ausgebildet sein. Die hervorstehende Kante kann Flanken aufweisen, die in unterschiedlichem Winkel zueinander ausgebildet sind. Insbesondere können die Flanken einen Winkel von 90° oder 60° zueinander einschließen. Der Winkelbereich, den die Flanken des Anschlagselements miteinander einschließen können, kann von 30° bis 120° reichen.

Der Steg der Stegleiste kann komplementäre Anschlagflächen, die an das Anschlagelement der Nut angepasst sind, aufweisen.

Der oder die Stege und/oder die Nut können elastisch ausgebildet sein, um die Steck-Schnapp-Verbindung zu bilden, so dass zumindest der Formschluss, der die Steckleiste, also die Stegleiste in der Nutleiste hält, durch Aufbringung einer entsprechend elastischen Kraft überwunden werden kann.

Hierzu kann der Steg insbesondere zweigeteilt, also mit zwei Teilstegen ausgebildet sein, die die elastische Verformung zum Ein- und Ausführen des Stegs in die Nut ermöglichen.

Die erfindungsgemäße Steck-Schnapp-Verbindung kann insbesondere vorteilhaft bei der Konstruktion von Kühlmöbeln und Großküchenmöbeln eingesetzt werden, wobei mit der Steck-Schnapp-Verbindung insbesondere isolierende Wandelemente miteinander verbunden werden können.

### KURZE BESCHREIBUNG DER FIGUREN

Die beigefügten Zeichnungen zeigen in rein schematischer Weise in
Fig. 1 eine Steck-Schnapp-Verbindung aus dem Stand der Technik,
Fig. 2 eine erste Ausführungsform einer erfindungsgemäßen Steck-Schnapp-Verbindung, und in
Fig. 3 eine zweite Ausführungsform einer erfindungsgemäßen Steck-Schnapp-Verbindung.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

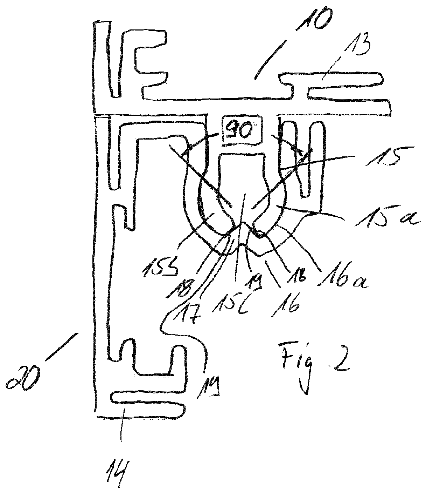

Die Fig. 2 zeigt eine erste Ausführungsform einer erfindungsgemäßen Steck-Schnapp-Verbindung, wobei ein erstes zu verbindendes Bauteil 10 eine Stegleiste mit einem Steg 15 aufweist, der sich senkrecht zur Bildebene in seiner Längsrichtung erstreckt, und wobei das andere zu verbindende Bauteil 20 eine Nutleiste mit einer Nut 16 aufweist, die sich ebenfalls senkrecht zur Bildebene in ihrer Längsrichtung erstreckt. Das erste Bauteil 10 weist einen Profilkörper 13 auf, der beispielsweise ein Teil einer Wand für ein Kühlmöbel sein kann. Das zweite Bauteil 20 weist ebenfalls einen Profilkörper 14 auf, der ebenfalls Teil einer Wand eines Kühlmöbels sein kann. Die Stegleiste 15 weist zwei Teilstege 15A und 15B auf, die einen Hohlraum 15C zwischen sich begrenzen. Zwischen den Teilstegen 15A und 15B ist in diesem Ausführungsbeispiel zur Stabilisierung ein Zwischensteg vorgesehen, wobei auch mehrere solche Stege vorgesehen sein können. Auf den Hohlraum kann jedoch auch verzichtet werden, wenn das Material, aus denen die Stegleiste bzw. der Steg 15 gebildet ist, elastisch komprimierbar ist.

Entsprechend können der Steg 15 und/oder die Nut 16 können ganz oder teilweise aus elastischem Material sein. Vorzugsweise ist jedoch nur der Steg ausreichend elastisch ausgebildet.

Die Teilstege 15A und 15B weisen jeweils eine Außenkontur auf, die der Innenkontur der Nut 16 entspricht. Entsprechend weisen die Teilstege 15A und 15B gerade Bereiche auf, die nach dem Einfügen des Stegs 15 in die Nut 16 an geraden Bereichen der Nut 16 anliegen. Darüber hinaus weisen die Teilstege 15A und 15B gekrümmte Bereiche mit einer Teilkreisaußenfläche auf, die sich in einem teilkreisförmigen Bereich 16A der Nut 16 befinden, wenn die Stegleiste 15 in der Nut 16 aufgenommen ist. Dadurch wird eine formschlüssige Verbindung der Steck-Schnapp-Verbindung zwischen dem ersten Bauteil 10 und dem zweiten Bauteil 20 erzielt, die eine lineare Bewegung quer zur Längsachse verhindert. Um ein Verkippen des ersten Bauteils 10 gegenüber dem zweiten Bauteil 20 um eine Drehachse senkrecht zur Bildebene, die etwa durch den Hohlraum 15C verlaufen kann und somit der Längsrichtung entspricht, zu verhindern, weist die Nut 16 ein in den Nutbereich vorstehendes Anschlagelement 17 auf, welches mit Anschlagflächen 18 der Teilstege 15A, 15B dadurch zusammenwirkt, dass Flanken 19 des Anschlagelements 17 an den Anschlagflächen 18 anliegen. Durch das in die Nut hervorstehende Anschlagelement 17 werden die Teilstege 15A und 15B daran gehindert sich drehend entlang des teilkreisförmigen Bereichs 16A der Nut zu bewegen und somit ein Verkippen der Bauteile 10 und 20 zu ermöglichen.

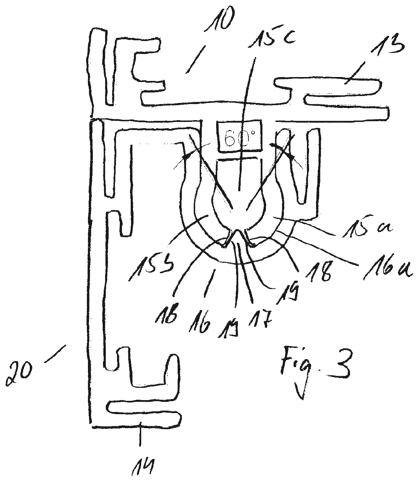

Die Fig. 3 zeigt ein weiteres Ausführungsbeispiel, welches im Wesentlichen identisch zu dem Ausführungsbeispiel der Fig. 2 ist und bei dem deshalb die identischen Komponenten mit gleichen Bezugszeichen versehen sind. Die Ausführungsform der Fig. 3 unterscheidet sich von der Ausführungsform der Fig. 2 lediglich darin, dass die mit den Anschlagflächen 18 der Teilstege 15A und 15B zusammenwirkenden Flanken 19 des Anschlagelements 17 einen anderen Winkel zueinander einschließen, als die Flanken 19 des Anschlagelements 17 der Fig. 2.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der vorliegenden Erfindung schließt sämtliche Kombinationen der vorgestellten Einzelmerkmale mit ein.

## Patentansprüche

1. Steck-Schnapp-Verbindung mit einer Nutleiste mit einer Nut (16) und einer Stegleiste mit mindestens einem Steg (15), der in die Nut (16) formschlüssig eingreift, wobei Nut und Steg eine Längsrichtung aufweisen, in der eine Längsachse definierbar ist, und wobei der Formschluss zwischen Steg und Nut eine lineare Bewegung zwischen Nut und Steg in mindestens einer Richtung quer zur Längsrichtung verhindert, wobei die Nut (16) ein Anschlagelement (17) aufweist und das Anschlagelement (17) Flanken (19) aufweist,
**dadurch gekennzeichnet, dass**
Anschlagflächen (18) des Stegs (15) derart an den Flanken (19) des Anschlagelements (17) anliegen, dass ein so entstehender Formschluss von Nut und Steg einer Bewegung gemäß einem weiteren Bewegungsfreiheitsgrad in Form einer Drehbewegung von Nut und Steg zueinander um die Längsachse und/oder einer translatorischen Bewegung entlang der Längsachse entgegensteht.

2. Steck-Schnapp-Verbindung nach Anspruch 1,
**dadurch gekennzeichnet, dass**
Nut und Steg quer zur Längsachse sich erstreckende Formschlusselemente aufweisen.

3. Steck-Schnapp-Verbindung nach Anspruch 1 oder 2,
**dadurch gekennzeichnet, dass**
das Anschlagelement (17) in die Nut (16) hervorsteht.

4. Steck-Schnapp-Verbindung nach einem der vorhergehenden Ansprüche,
**dadurch gekennzeichnet, dass**
die Flanken (19) einen Winkel zwischen 30° bis 120°, vorzugsweise 60° bis 90° miteinander einschließen.

5. Steck-Schnapp-Verbindung nach einem der vorhergehenden Ansprüche,
**dadurch gekennzeichnet, dass**
der Steg (15) und/oder die Nut (16) elastisch ausgebildet sind.

6. Steck-Schnapp-Verbindung nach einem der vorhergehenden Ansprüche,
**dadurch gekennzeichnet, dass**
der Steg (15) zwei Teilstege (15A, 15B) aufweist, die einen Hohlraum (15C) begrenzen, wobei die Enden der Teilstege als Formschlusselemente zur Sicherung gegen ein Verdrehen um die Längsachse dienen.

7. Steck-Schnapp-Verbindung nach einem der vorhergehenden Ansprüche,
**dadurch gekennzeichnet, dass**
der Steg (15) oder die Teilstege (15A und 15B) gekrümmte Bereiche mit einer Teilkreisaußenfläche aufweisen, die sich in einem teilkreisförmigen Bereich (16A) der Nut (16) befinden, wenn die Stegleiste (15) in der Nut (16) aufgenommen ist.

8. Möbel, insbesondere Kühlmöbel, mit einer Steck-Schnapp-Verbindung nach einem der vorhergehenden Ansprüche.

## Claims

1. Plug-in snap connection with a grooved strip with a groove (16) and a web strip with at least one web (15) which engages the groove (16) in a positive locking manner, wherein groove and web have a longitudinal direction in which a longitudinal axis can be defined, and wherein the positive locking between groove and web prevents a linear movement between groove and web in at least one direction transverse to the longitudinal direction, wherein the groove (16) has a stop member (17) and the stop member (17) has flanks (19),
**characterised by the fact that**
stop surfaces (18) of the web (15) abut the flanks (19) of the stop member (17) such that a resultant positive locking of groove and web opposes a movement in line with a further degree of freedom of movement in the form of a rotational movement of groove and web towards each other about the longitudinal axis and/or a translational movement along the longitudinal axis.

2. Plug-in snap connection in accordance with claim 1,
**characterised by the fact that**
groove and web have positive-locking members extending transversely to the longitudinal axis.

3. Plug-in snap connection in accordance with claim 1 or 2,
**characterised by the fact that**
the stop member (17) protrudes into the groove (16).

4. Plug-in snap connection in accordance with any of the preceding claims,
**characterised by the fact that**
the flanks (19) enclose an angle of 30 DEG to 120 DEG, preferably 60 DEG to 90 DEG.

5. Plug-in snap connection in accordance with any of the preceding claims,
**characterised by the fact that**
the web (15) and/or the groove (16) are designed to be elastic.

6. Plug-in snap connection in accordance with any of the preceding claims,
**characterised by the fact that**
the web (15) has two partial webs (15A, 15B) which bound a cavity (15C), wherein the ends of the partial webs serve as positive-locking members for securing against twisting about the longitudinal axis.

7. Plug-in snap connection in accordance with any of the preceding claims,
**characterised by the fact that**
the web (15) or the partial webs (15A and 15B) have curved regions which have an outer surface in the form of a partial circle and which are located in a region in the form of a partial circle (16A) of the groove (16) when the web strip (15) is accommodated in the groove (16).

8. Furniture, in particular refrigeration furniture, with a plug-in snap connection in accordance with any of the preceding claims.

## Revendications

1. Liaison par enfichage et encliquetage avec une barre de rainure présentant une rainure (16) et une barre de nervure présentant au moins une nervure (15) qui s'engage par complémentarité de formes dans la rainure (16), la rainure et la nervure présentant un sens longitudinal, dans lequel un axe longitudinal peut être défini, et la liaison par complémentarité de formes entre la nervure et la rainure empêchant un mouvement linéaire entre la rainure et la nervure dans au moins un sens transversal au sens longitudinal, la rainure (16) présentant un élément de butée (17) et l'élément de butée (17) présentant des flancs (19),
**caractérisée en ce que**
des surfaces de butée (18) de la nervure (15) reposent contre les flancs (19) de l'élément de butée (17) de telle manière qu'une liaison par complémentarité de formes ainsi apparue de la rainure et la nervure s'oppose à un mouvement selon un autre degré de liberté de mouvement sous la forme d'un mouvement rotatif de la rainure et la nervure l'une par rapport à l'autre autour de l'axe longitudinal et/ou à un mouvement de translation le long de l'axe longitudinal.

2. Liaison par enfichage et encliquetage selon la revendication 1,
**caractérisée en ce que**
la nervure et la rainure présentent des éléments de liaison par complémentarité de formes s'étendant transversalement à l'axe longitudinal.

3. Liaison par enfichage et encliquetage selon la revendication 1 ou 2,
**caractérisée en ce que**
l'élément de butée (17) dépasse dans la rainure (16).

4. Liaison par enfichage et encliquetage selon l'une quelconque des revendications précédentes,
**caractérisée en ce que**
les flancs (19) forment entre eux un angle entre 30 et 120°, de préférence 60 et 90°.

5. Liaison par enfichage et encliquetage selon l'une quelconque des revendications précédentes,
**caractérisée en ce que**
la nervure (15) et/ou la rainure (16) sont réalisées élastiquement.

6. Liaison par enfichage et encliquetage selon l'une quelconque des revendications précédentes,
**caractérisée en ce que**
la nervure (15) présente deux nervures partielles (15A, 15B) qui limitent une cavité (15C), les extrémités des nervures partielles servant d'éléments de liaison par complémentarité de formes pour la protection contre une rotation autour de l'axe longitudinal.

7. Liaison par enfichage et encliquetage selon l'une quelconque des revendications précédentes,
**caractérisée en ce que**
la nervure (15) ou les nervures partielle (15A et 15B) présentent des zones courbées avec une surface extérieure circulaire partielle qui se trouvent dans une zone circulaire partielle (16A) de la rainure (16) lorsque la barre de nervure (15) est reçue dans la rainure (16).

8. Meuble, en particulier meuble réfrigérant avec une liaison par enfichage et encliquetage selon l'une quelconque des revendications précédentes.
